# FASCICULE DE BREVET EUROPEEN

(11) **EP 1 342 663 B1**
(45) Date de publication et mention de la délivrance du brevet: **10.08.2005**
(21) Numéro de dépôt: 03290434.4
(22) Date de dépôt: 24.02.2003
(51) Int. Cl.: B64C 25/26

(54) **Dispositif d'accrochage et son procédé de fonctionnement, notamment pour un train d'atterrissage d'aéronef**
Sperreinrichtung und zugehöriges Betriebsverfahren, insbesondere für ein Flugzeugfahrwerk
Locking device and its operating method, in particular for an aircraft landing gear

(30) Priorité: 04.03.2002 FR 0202695
(43) Date de publication de la demande: 10.09.2003
(73) Titulaire: Messier-Bugatti, 78140 Velizy Villacoublay (FR)
(72) Inventeur: Collet, Olivier, 91120 Palaiseau (FR); Felemez, Eric, 91440 Bures-Sur-Yvette (FR); Liegeois, Pierre-Yves, 92150 Suresnes (FR); Fremiot, Sébastien, 92100 Boulogne Billancourt (FR); Perathoner, Dominique, 78640 Saint-Germain de la Grange (FR)
(74) Mandataire: Jaunez, Xavier

(56) Documents cités:
- EP-A- 0 265 197
- DE-C- 731 274
- FR-A- 1 523 401
- GB-A- 2 161 202
- US-A- 5 288 037

## Description

La présente invention concerne un dispositif d'accrochage, et plus particulièrement un dispositif pour l'accrochage d'un train d'atterrissage d'aéronef ou d'une trappe de train d'atterrissage d'aéronef.

### ARRIERE-PLAN DE L'INVENTION

Conformément à une approche classique, les dispositifs d'accrochage de ce type comportent un boîtier dans lequel est agencé un ensemble d'éléments articulés montés pour pivoter autour d'axes respectifs parallèles, ledit ensemble incluant à tout le moins un crochet et un levier de verrouillage relié audit crochet par des moyens de rappel élastiquement déformables associés. Le crochet peut alors être déverrouillé en agissant sur le levier de verrouillage soit par un premier moyen d'actionnement dans un mode de fonctionnement normal, soit par un second moyen d'actionnement dans un mode de fonctionnement en secours lorsque ledit premier moyen d'actionnement ne parvient pas à déverrouiller le crochet.

L'état de la technique le plus proche est illustré par le document US-A-5 288 037 de la demanderesse.

Ce document décrit un dispositif d'accrochage pour l'accrochage d'un train d'atterrissage d'aéronef, comportant un boîtier dans lequel est agencé un ensemble d'éléments articulés montés pour pivoter autour d'axes respectifs parallèles, ledit ensemble incluant à tout le moins un crochet et un levier de verrouillage, ledit crochet pouvant être déverrouillé en agissant sur ledit levier de verrouillage soit par un premier moyen d'actionnement dans un mode de fonctionnement normal, soit par un second moyen d'actionnement dans un mode de fonctionnement en secours lorsque ledit premier moyen d'actionnement ne parvient pas à déverrouiller le crochet, conformément au préambule de la revendication 1.

Plus précisément le dispositif précité comporte un levier de verrouillage articulé dont une première branche porte un galet d'appui coopérant avec une surface de came du crochet, et dont une deuxième branche est reliée, par l'intermédiaire d'un embiellage, à l'arbre de sortie d'un ensemble moto-réducteur. Pour le déverrouillage en secours, il est prévu une lumière oblongue dans l'embiellage afin d'autoriser le pivotement du crochet malgré le blocage et un actionneur indépendant suffisant pour faire pivoter le levier de déverrouillage et dégager le galet d'appui. Cet actionneur indépendant est cependant réalisé sous la forme d'un vérin pyrotechnique à usage unique (déclenchement par une cartouche de poudre qui libère un gaz propulseur).

Il convient de noter qu'un tel vérin pyrotechnique ne saurait être comparé à un actionneur électro-mécanique à commande électrique indépendante, et que ledit vérin pyrotechnique concerne le fonctionnement en secours et non le fonctionnement normal.

L'arrière-plan technologique est également illustré par les documents DE-C-731 274, US-A-3 504 406 et EP-A-0 265 197.

Le problème que l'invention se propose principalement de résoudre concerne la structure et l'agencement du premier moyen d'actionnement qui est associé au mode de fonctionnement normal.

Ce premier moyen d'actionnement est habituellement réalisé sous la forme d'un actionneur linéaire de type hydraulique. L'avantage de tels actionneurs est que leur fonctionnement est fiable, car il s'agit d'une technologie maîtrisée depuis longtemps. On pourra par exemple se référer au document GB-A-2 161 202.

Ce document décrit un verrou qui solidarise en situation normale les pièces formant le crochet. Une action sur la tringle permet de déverrouiller cette liaison en cas de blocage, et d'autoriser la rotation relative de ces pièces. Le moyen d'actionnement associé au fonctionnement normal est un actionneur linéaire classique de type hydraulique (vérin 28).

Il est brièvement indiqué en fin de description que l'on peut utiliser en variante des moyens d'actionnement à commande électrique, mais le texte est muet sur la puissance et le caractère indépendant de cette éventuelle commande électrique.

On s'oriente cependant actuellement de plus en plus vers une recherche de limitation des composants hydrauliques, en raison de leur poids important, et aussi des risques de fuites qui y sont associés.

En outre, avec l'agencement hydraulique classiquement utilisé, il est prévu un bloc unique d'alimentation dirigeant du fluide à la fois vers le vérin de manoeuvre du train et vers le bloc d'accrochage. Ainsi, lorsque l'on souhaite déverrouiller le crochet, la commande hydraulique agit également sur le vérin de manoeuvre, ce qui tend à augmenter encore la charge exercée sur le crochet, et par suite impose d'utiliser un dispositif d'accrochage capable de développer un effort suffisamment important pour pouvoir vaincre les efforts de charge exercés sur le crochet et absorber les énergies internes générées par l'ouverture du crochet sous ces efforts de charge. Bien entendu, la puissance nécessaire implique de prévoir des éléments de poids non négligeable, ce qui est toujours défavorable dans le domaine aéronautique.

### OBJET DE L'INVENTION

Il apparaît donc intéressant de concevoir un dispositif d'accrochage dont le premier moyen d'actionnement associé au mode de fonctionnement normal soit capable de réaliser un déverrouillage avec une puissance minimale développée, le déverrouillage s'effectuant en outre sans bruits ni vibrations en mode normal, tout en résistant aux échauffements importants susceptibles d'être rencontrés.

Subsidiairement, un autre problème concerne le second moyen d'actionnement qui intervient dans un mode de fonctionnement en secours lorsque le premier moyen d'actionnement ne parvient pas à déverrouiller le crochet. On se situe dans une situation de panne, dans laquelle le train d'atterrissage ne parvient pas à sortir normalement. Le poids du train exerce alors une charge importante sur le crochet. Par suite, pour procéder quand même au déverrouillage du crochet, il faut développer un couple important afin de vaincre d'éventuels grippages de la cinématique.

Traditionnellement, ce second moyen d'actionnement associé au mode de fonctionnement en secours est constitué par un actionneur électro-mécanique réalisé sous la forme d'un moteur électrique commun, qui commande à la fois les tringleries des boîtiers d'accrochage de l'aéronef et les valves hydrauliques associées. Ceci implique alors la présence d'une timonerie qui est relativement lourde, et toujours difficile à régler lors de la maintenance. En effet, on impose au constructeur de respecter une séquence dans la situation de secours : on commence par couper l'hydraulique, puis on met tout le circuit au retour, et on commande les boîtiers de trappes, et enfin les boîtiers de train d'atterrissage.

Il apparaît dès lors intéressant de pouvoir disposer d'un dispositif d'accrochage équipé d'un second moyen d'actionnement associé au mode de fonctionnement en secours, qui permette de développer un couple élevé pour le déverrouillage sous charge du crochet, sans pour autant avoir à surdimensionner des moteurs ni subir les contraintes d'une timonerie lourde.

### BREVE DESCRIPTION DE L'INVENTION

Le problème principal énoncé plus haut est résolu conformément à l'invention grâce à un dispositif d'accrochage du type précité, dans lequel le levier de verrouillage est relié au crochet par des moyens de rappel élastiquement déformables associés, et dans lequel le premier moyen d'actionnement associé au mode de fonctionnement normal est un actionneur électro-mécanique à commande électrique indépendante, ledit actionneur électro-mécanique étant de faible puissance, c'est-à-dire de puissance inférieure à celle qui serait nécessaire pour déverrouiller le crochet en l'absence d'un soulagement préalable de celui-ci, conformément à la partie caractérisante de la revendication 1.

Dans un mode d'exécution préféré, l'actionneur électro-mécanique est un électro-aimant fixé au boîtier, dont le noyau plongeur commande le mouvement axial ou rotatif d'un poussoir agissant sur le levier de verrouillage.

De préférence alors, l'électro-aimant inclut un ressort tendant à rappeler le poussoir dans une position rentrée dès que ledit électro-aimant cesse d'être excité, laquelle position correspond à une position verrouillée du levier de verrouillage. En particulier, le poussoir de l'électro-aimant coopère avec un appendice saillant du levier de verrouillage prévu sur ledit levier au voisinage de l'axe de pivotement de celui-ci.

De préférence encore, l'électro-aimant est du type à double bobinage, et inclut un moyen de diminution de la consommation électrique après la fin du mouvement de déverrouillage.

Avantageusement, l'électro-aimant est fixé au boîtier de façon démontable, en étant aisément accessible, pour pouvoir être directement remplacé par un autre électro-aimant sans avoir à démonter ledit boîtier.

On pourra en variante prévoir que l'actionneur électro-mécanique est un vérin électrique linéaire, ou encore un moto-réducteur ou un moteur couple de petite taille.

Subsidiairement, il est intéressant de prévoir que le second moyen d'actionnement soit également un actionneur électro-mécanique à commande électrique indépendante, ledit actionneur électro-mécanique comportant deux moteurs électriques associés de façon irréversible à un train différentiel commun, dont un arbre de sortie commande le pivotement d'un levier de déverrouillage en secours coopérant avec le levier de verrouillage utilisé en fonctionnement normal.

L'invention concerne également un procédé de fonctionnement d'un dispositif d'accrochage présentant l'une au moins des caractéristiques précitées, ledit dispositif servant à assurer l'accrochage d'un train d'atterrissage d'aéronef dont le mouvement entre les positions train bas et train haut est commandé de façon connue en soi par un vérin de manoeuvre.

Selon l'invention, et conformément à la revendication 9, le procédé, intervenant pour la libération du train rentré, comporte la succession d'étapes suivantes :
- on agit sur le vérin de manoeuvre du train dans le sens de la rentrée dudit train pour soulager le levier de verrouillage du dispositif d'accrochage;
- on commande le premier moyen d'actionnement pour déverrouiller le crochet ainsi soulagé ; et
- on agit sur le vérin de manoeuvre du train dans le sens de la sortie dudit train, ledit premier moyen d'actionnement restant alimenté.

De préférence, en cas de dysfonctionnement de l'étape préliminaire de soulagement du crochet du dispositif d'accrochage, on commande ledit second moyen d'actionnement pour déverrouiller en secours le crochet, la descente du train s'effectuant alors éventuellement librement par gravité.

D'autres caractéristiques et avantages de l'invention apparaîtront plus clairement à la lumière de la description qui va suivre et des dessins annexés, concernant un mode de réalisation particulier.

### BREVE DESCRIPTION DES DESSINS

Il sera fait référence aux figures où :
- la figure 1 illustre un dispositif d'accrochage conforme à l'invention, en position de verrouillage normal du crochet ;
- la figure 2 est une vue analogue à celle de la figure 1, illustrant un mode de déverrouillage normal, c'est-à-dire faisant intervenir, conformément à l'invention, le premier moyen d'actionnement, lequel est en l'espèce réalisé sous la forme d'un électro-aimant ;
- la figure 3 est une vue analogue aux précédentes, illustrant une séquence de déverrouillage en secours, dans laquelle intervient un second moyen d'actionnement associé au mode de fonctionnement en secours, qui est en l'espèce réalisé sous la forme d'un actionneur électro-mécanique comportant deux moteurs électriques associés de façon irréversible à un train différentiel commun ;
- la figure 4 est une vue analogue aux précédentes, illustrant une séquence de déverrouillage du crochet en mode de maintenance, par actionnement manuel d'un levier de déverrouillage en maintenance ;
- la figure 5 illustre schématiquement le procédé de l'invention, qui est un procédé de fonctionnement du dispositif d'accrochage précité en mode de fonctionnement normal, avec en a) le soulagement préalable du crochet, et en b) le déverrouillage du crochet et la descente normale du train ;
- la figure 6 illustre schématiquement la structure du second moyen d'actionnement associé au mode de fonctionnement en secours, conformément à un premier mode d'exécution ;
- la figure 7 illustre schématiquement le train différentiel commun du moyen d'actionnement illustré en figure 6 ;
- la figure 8 illustre en coupe la structure du moyen d'actionnement précédent ;
- la figure 9 est une coupe selon IX-IX de la figure 8, permettant de mieux distinguer le train différentiel commun et l'arbre de sortie qui commande le pivotement du levier de déverrouillage en secours (comme illustré sur la figure 3) ;
- la figure 10 illustre une variante de réalisation du moyen d'actionnement précédent associé au mode de fonctionnement en secours, l'actionneur comportant alors un train réducteur épicycloïdal associé au train différentiel commun ;
- la figure 11 illustre schématiquement encore une autre variante de l'actionneur associé au mode de fonctionnement en secours, ledit actionneur comportant alors un train différentiel commun à pignons coniques et un mécanisme anti-retour associé, ainsi qu'un limiteur de couple et un train réducteur.

### DESCRIPTION DETAILLEE DE L'INVENTION

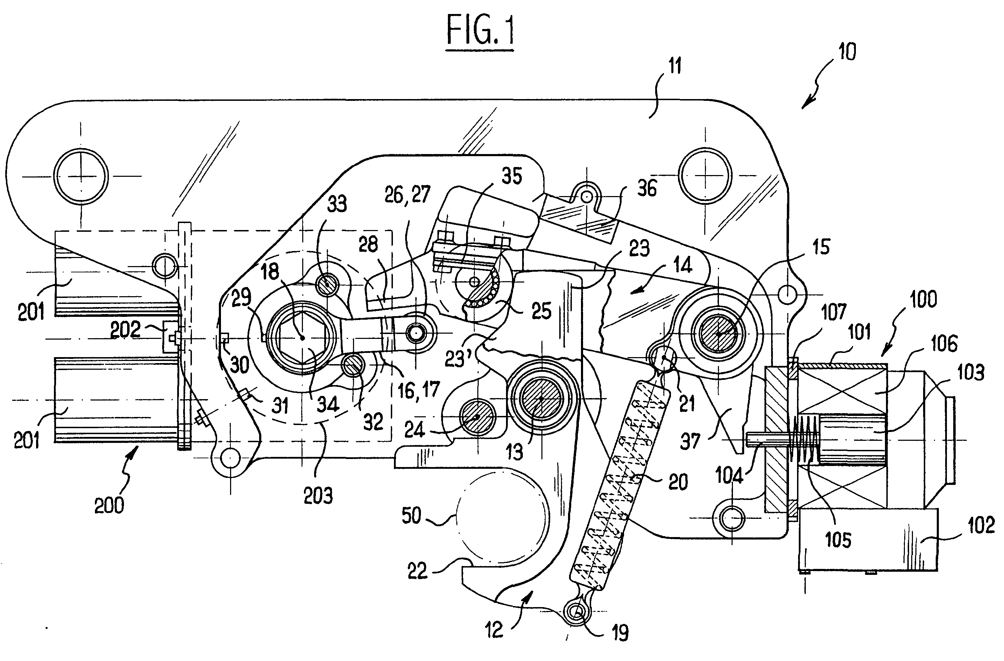

On va tout d'abord décrire la structure générale du dispositif d'accrochage selon l'inventici, qui est en l'espèce destiné à assurer l'accrochage d'un train d'atterrissage d'aéronef ou d'une trappe de train d'atterrissage d'aéronef. On va se référer pour cela aux figures 1 à 4, qui illustrent les différents composants d'un dispositif d'accrochage selon l'invention dans ses différents modes de fonctionnement. Dans toutes ces figures, la représentation du dispositif d'accrochage correspond à une vue en élévation du dispositif après enlèvement de l'un des deux flasques formant le boîtier dudit dispositif. Pour plus de clarté, les axes des éléments articulés et les butées de certains de ces éléments, lesdits axes et lesdites butées étant parallèles à une direction transversale au plan des flasques du boîtier, étant représentés en coupe.

Le dispositif d'accrochage 10 comporte un boîtier 11, dont on ne distingue en l'espèce que l'un des deux flasques constitutifs dudit boîtier. Dans ce boîtier 11 est agencé un ensemble d'éléments articulés qui sont montés pour pivoter autour d'axes respectifs parallèles. Cet ensemble constitue une timonerie, qui en l'espèce inclut essentiellement deux composants fondamentaux, à savoir un crochet 12 monté pour pivoter autour d'un axe 13, et un levier de verrouillage 14, monté pour pivoter autour d'un axe 15, et relié audit crochet par des moyens de rappel élastiquement déformables 20 associés. Les moyens déformables 20 sont en l'espèce constitués par deux ressorts à boudins qui sont accrochés en 19 sur le crochet 12 et en 21 sur le levier 14. Un tel système à deux composants ne constitue naturellement qu'un exemple pour illustrer l'invention, étant entendu que l'on pourra utiliser d'autres types de timoneries à plus de deux composants, par exemple une timonerie à trois composants comportant un levier intermédiaire intervenant entre le levier de verrouillage et le crochet.

La position de la figure 1 correspond à une position de verrouillage normal du crochet 12, dans laquelle ledit crochet maintient une noix 50 (en traits mixtes sur la figure) du système à verrouiller, par exemple faisant partie d'un appendice solidaire d'une jambe de train d'atterrissage. La partie inférieure 22 du crochet 12 assure ainsi le maintien en place de la noix 50. La partie supérieure 23 du même crochet 12 passe quant à elle entre les deux flasques constitutifs du levier de verrouillage 14, et, dans cette position, vient en appui contre un galet 25 porté par ledit levier 14. Le crochet 12 comporte également une excroissance intermédiaire 23', qui n'intervient pas dans cette position de verrouillage normal. On a illustré en 35 une cible de capteur portée par le levier de verrouillage 14 et qui coopère avec l'un ou l'autre de deux capteurs (non visibles ici) qui sont portés par un flasque du boîtier 11, pour envoyer un signal témoignant de la position du levier 14, en l'espèce la position correcte de verrouillage dudit levier.

Deux autres éléments articulés équipent également le dispositif d'accrochage 10, et concernent des situations de fonctionnement respectivement en secours et en maintenance. On trouve ainsi deux leviers 16, 17 qui sont juxtaposés sur un axe commun 18, et à l'extrémité de chacun desquels est prévu un galet respectivement 26, 27 destiné à coopérer avec un béquet avant 28 du levier de verrouillage 14. Un système de butées basse 32 et haute 33 est prévu pour chacun de ces deux leviers 16, 17, afin de limiter la plage de rotation desdits leviers.

Comme on le verra par la suite, le levier 16, qui est derrière le levier 17 sur les figures 1 à 4, est commandé par un moyen d'actionnement constitué par un actionneur électro-mécanique associé au mode de fonctionnement en secours, cet actionneur étant référencé 200. On décrira plus loin plus en détail la structure particulière de ce moyen d'actionnement en secours 200.

On notera également que le levier 16 porte une excroissance 29 de l'autre côté de son axe 18, laquelle excroissance 29 sert de cible pour deux capteurs de position angulaire 30 et 31 qui sont fixés sur le boîtier 11 du dispositif. En mode de fonctionnement normal, le levier 16 n'intervient pas, et le capteur 30 associé détecte la position correcte de l'excroissance 29 qui correspond à l'appui du levier 16 sur la butée basse 32. Le levier 17 est quant à lui appliqué contre cette même butée basse 32 par un ressort de torsion intégré à l'axe dudit levier, l'actionnement de ce levier 17 se faisant par un bout d'axe hexagonal 34.

Conformément à un aspect essentiel de l'invention, le crochet 12 peut être déverrouillé en agissant sur le levier de verrouillage 14 par un premier moyen d'actionnement 100 dans le mode de fonctionnement normal, lequel moyen d'actionnement est constitué par un actionneur électro-mécanique de faible puissance à commande électrique indépendante.

En l'espèce, l'actionneur électro-mécanique 100 est un électro-aimant qui est fixé par son boîtier étanche 101 au boîtier 11 du dispositif d'accrochage 10, au moyen d'une couronne de fixation 107. Le noyau plongeur 103 de l'électro-aimant 100 commande le mouvement ici axial d'un poussoir 104 agissant sur le levier de verrouillage 14, et plus particulièrement ici en coopérant avec un appendice saillant 37 du levier de verrouillage 14, qui est prévu sur ledit levier au voisinage de l'axe de pivotement 15 de celui-ci. On pourra en variante prévoir que le noyau plongeur commande un mouvement rotatif du poussoir (variante non illustrée ici). On constate en outre que l'électro-aimant 100 inclut un ressort 105 qui tend à rappeler le poussoir 104 dans une position rentrée, laquelle position correspond à une position verrouillée du levier de verrouillage 14. Cette position rentrée du poussoir 104 correspond à l'illustration de la figure 1. On a représenté schématiquement l'enroulement 106 de l'électro-aimant 100 disposé à l'intérieur du boîtier 101 associé, lequel enroulement est de préférence du type à double bobinage. Ceci permet, grâce aux moyens de commande associés logés dans le boîtier de commande 102, d'organiser des séquences d'alimentation successives qui permettent un mouvement rapide du poussoir vers l'extérieur, en limitant l'échauffement des enroulements. En effet, le poussoir 104 agit sur l'appendice saillant 37, et doit vaincre l'effort résistant qui est rencontré, afin de déplacer le levier de verrouillage 14 pour le faire pivoter autour de son axe 15 jusqu'à libérer la rotation du crochet 12 autour de son axe 13, et par suite la noix 50. On pourra aussi prévoir un système de diminution de la consommation électrique de l'électro-aimant 100 après la fin du mouvement du noyau plongeur (fin du mouvement de déverrouillage). Ce système peut être réalisé en utilisant des capteurs d'état (verrouillé - non verrouillé) équipant le boîtier, ou encore une temporisation électronique.

De préférence, l'électro-aimant 100 est fixé au boîtier 11 de façon démontable, en étant aisément accessible, pour pouvoir être directement remplacé par un autre électro-aimant sans avoir à démonter ledit boîtier.

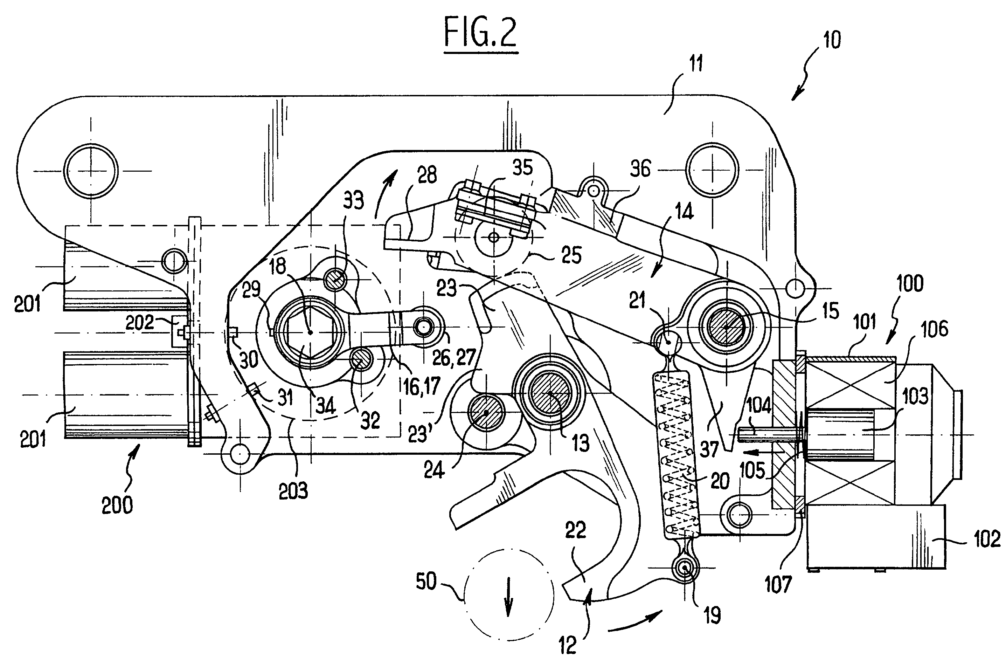

Si l'on examine maintenant la figure 2, on distingue alors la position des différents composants du dispositif d'accrochage 10 précédemment décrit lors du déverrouillage normal.

L'électro-aimant 100 est alors excité par les moyens de commande associés 102, ce qui provoque la sortie du poussoir 104 qui coopère alors avec l'appendice saillant 37 du levier de verrouillage 14. Le levier 14 pivote alors dans le sens horaire autour de son axe 15, et le crochet 12, dont la tête 23 reste en contact avec le galet 25 porté par le levier 14, peut commencer à pivoter autour de son axe 13 dans le sens anti-horaire, en restant soumis à l'action des ressorts 20. Lorsque le galet 25 arrive sur la piste de came prévue en partie haute de crochet 23, le crochet 12 peut alors pivoter jusqu'à la position de déverrouillage qui est illustrée sur la figure 2, position dans laquelle l'appendice 23' vient en appui sur la butée associée 24, et ce tant que l'électro-aimant 100 reste alimenté. La noix 50 est alors libérée, et le train d'atterrissage peut donc librement descendre, ou la trappe de train associée respectivement s'ouvrir. La position illustrée sur la figure 2 est une position naturellement stable, et il n'est en fait pas nécessaire de maintenir le courant d'excitation de l'électro-aimant 100, de sorte que cette alimentation peut être coupée, et le poussoir 104 alors ramené en position rentrée, qui est la position de repos, par l'action du ressort associé 105. Dans cette position déverrouillée, le levier de verrouillage 14 est quant à lui en appui contre la rampe 23 du crochet 12 via son galet 25. Une butée haute 36 peut être également prévue, fixée au boîtier 11, qui est de préférence réalisée en matériau déformable afin d'éviter tout chocs ou vibrations indésirables.

Il est aisé de comprendre qu'un électro-aimant de petite taille, comme celui illustré ici, n'est capable que de développer des efforts modérés, et en particulier ne saurait faire pivoter le crochet 12 sous pleine charge par le seul pivotement du levier de verrouillage 14.

Il est donc intéressant de faire en sorte que ce moyen d'actionnement puisse rester de dimension et de poids faibles, comme cela est particulièrement désirable dans le domaine aéronautique.

Ainsi, et conformément à un autre aspect de l'invention, il est prévu un procédé de fonctionnement du dispositif d'accrochage 10 précédemment décrit, ledit dispositif servant à assurer l'accrochage d'un train d'atterrissage d'aéronef dont le mouvement entre les positions train bas et train haut est commandé de façon connue en soi par un vérin de manoeuvre.

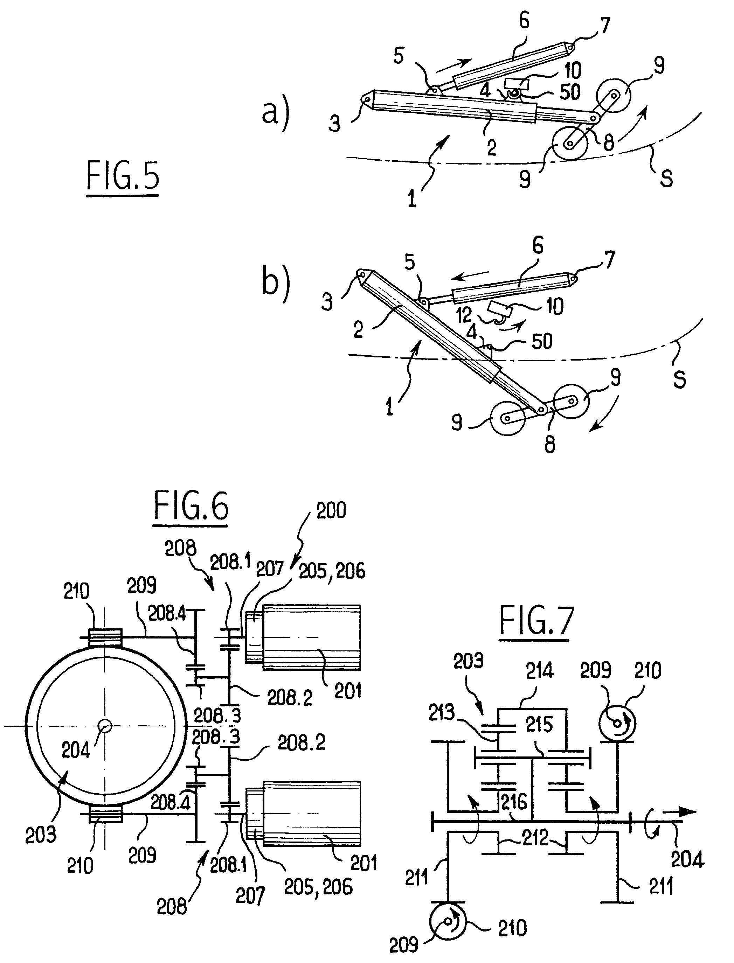

Pour bien comprendre les étapes du procédé de fonctionnement dont il est question ici, on se référera à la figure 5 qui est une représentation très schématisée de la réalité.

En a), on distingue un train d'atterrissage d'aéronef 1 représenté de façon extrêmement schématique. Le train d'atterrissage 1 comporte ainsi une jambe de train 2 articulée en 3 sur une structure d'aéronef S, avec, en extrémité de ladite jambe de train, un balancier 8 portant deux paires de roues 9. Un vérin de manoeuvre 6 est associé au pivotement de la jambe de train 2, ledit vérin étant accroché par son corps en un point 7 de la structure d'aéronef S, et par sa tige sur un appendice 5 de la jambe de train 2. L'appendice 4 porte l'olive 50 dont il a été précédemment question, qui est destinée à coopérer avec le crochet 12 du dispositif d'accrochage 10.

En a), la position illustrée correspond à une position train haut, que l'on rencontre au début de l'actionnement du dispositif d'accrochage pour faire descendre le train. Dans cette position a), l'olive 50 est prisonnière du crochet 12 du dispositif d'accrochage 10.

C'est là qu'intervient le procédé de fonctionnement selon l'invention, pour libérer le train rentré, conformément à la succession d'étapes suivantes.

On commence par agir sur le vérin de manoeuvre 6 du train 1 dans le sens de la rentrée dudit train pour soulager le crochet 12 du dispositif d'accrochage 10, ce qui est illustré par les flèches représentées sur la position a). Ceci est rendu possible par l'indépendance entre la commande du dispositif d'accrochage 10 et celle du vérin de manoeuvre 6, contrairement aux réalisations de l'art antérieur. L'actionnement du vérin de manoeuvre 6 tend alors à faire remonter très légèrement la jambe de train, et permet ainsi de soulager le crochet 12, la charge exercée par l'olive 50 changeant de sens.

On commande alors le premier moyen d'actionnement 100, en l'espèce l'électro-aimant précité, pour déverrouiller le crochet 12 ainsi soulagé. Les efforts à vaincre étant réduits à ceux des ressorts 20, on pourra alors se contenter d'un actionneur de faible puissance, et par suite de masse peu importante.

Comme illustré en b), un fois le crochet 12 déverrouillé, on peut commander normalement le vérin de manoeuvre 6 pour procéder à la descente du train d'atterrissage 1, l'actionneur 100 restant alimenté.

Il est intéressant de réaliser l'actionneur électro-mécanique intervenant en fonctionnement normal sous la forme d'un électro-aimant comme illustré ici, car la séquence peut être extrêmement rapide, par exemple de l'ordre du dixième de seconde. On pourra cependant en variante réaliser cet actionneur électro-mécanique sous la forme d'un vérin électrique linéaire, ou encore d'un motoréducteur ou d'un moteur couple de petite taille.

Dans tous les cas, on se satisfera d'un actionneur électro-mécanique de faible puissance, c'est-à-dire dont la puissance est très inférieure à la puissance qui serait nécessaire si le crochet à déverrouiller était sous charge. La valeur de cette puissance nécessaire dépendra naturellement du type de train ou de trappe concerné, mais on peut à titre indicatif citer un ordre de grandeur de 300 watts pour cette puissance dans le cas d'un avion gros porteur.

La séquence précitée, avec le soulagement préalable de la charge du mécanisme par le vérin de manoeuvre, permet de réaliser un déverrouillage sans bruits ni vibrations en mode normal.

On aura compris qu'il est important que l'actionneur électro-mécanique associé au mode de fonctionnement normal soit de faible puissance et à commande électrique indépendante.

Si l'on avait conservé l'actionneur linéaire de type électro-hydraulique de l'art antérieur, et que l'on s'était contenté de prévoir une commande indépendante de l'actionneur de chaque dispositif d'accrochage, ceci aurait impliqué de prévoir un électro-distributeur supplémentaire pour commander en successif le train par rapport au dispositif d'accrochage. Par ailleurs, si l'on s'était contenté de remplacer l'actionneur électro-hydraulique par l'actionneur électro-mécanique prévu ici, mais avec une commande dépendante de celle du vérin de manoeuvre, alors on aurait eu un dispositif très encombrant, car il eût été nécessaire de développer une puissance très élevée pour le boîtier lourdement chargé.

On va maintenant procéder à la description de modes de fonctionnement en secours ou en maintenance, modes dans lesquels n'intervient pas l'électro-aimant 100 qui vient d'être décrit.

Il est en effet prévu un second moyen d'actionnement 200 associé au mode de fonctionnement en secours, lequel moyen est également un actionneur électro-mécanique à commande électrique indépendante, et comporte deux moteurs électriques 201 associés de façon irréversible à un train différentiel commun 203, dont un arbre de sortie commande le pivotement du levier de déverrouillage en secours associé 16 qui coopère avec le levier de verrouillage 14 utilisé en fonctionnement normal.

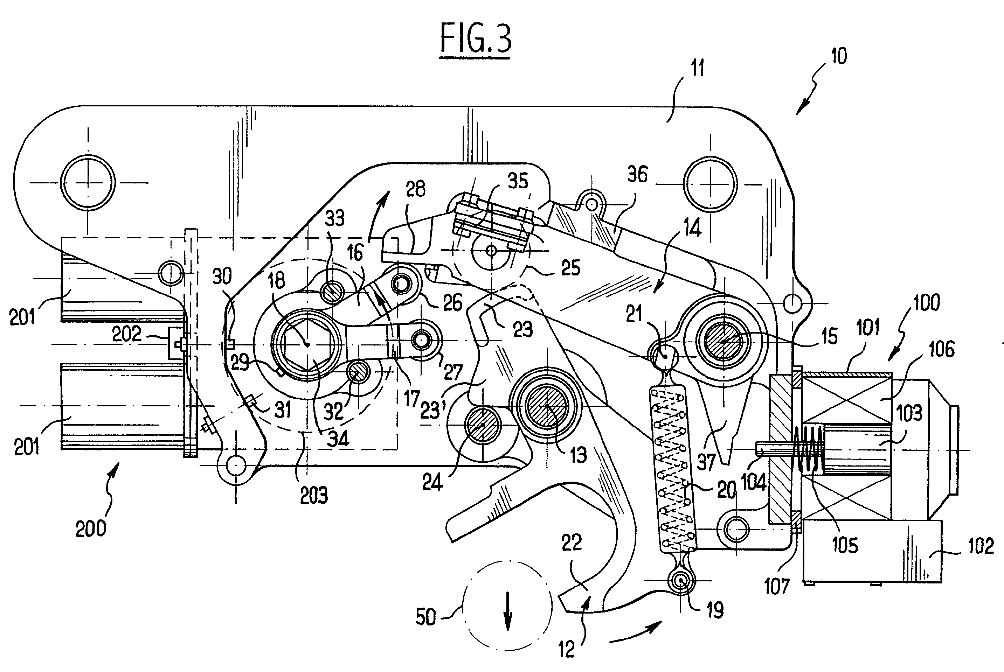

Le mode de déverrouillage en secours, qui intervient donc en cas de panne, est illustré sur la figure 3.

Dans ce cas, l'actionneur électro-mécanique 200, dont la commande électrique indépendante est notée 202, intervient pour faire tourner le levier de déverrouillage en secours 16, par suite de la commande de l'un au moins de ses deux moteurs électriques 201. Les deux moteurs 301 pourront être, par exemple, des moteurs asynchrones alimentés en courant triphasé. Sur la figure 3, on distingue le levier de verrouillage en secours 16 qui n'était pas visible sur les figures 1 et 2, et le pivotement dans le sens anti-horaire de ce levier 16 a provoqué le pivotement dans le sens horaire du levier de verrouillage 14, par coopération entre le galet 26 associé et le béquet avant 28 dudit levier 14. Le pivotement du levier 16 de déverrouillage en secours est limité par une butée haute associée 33. Afin d'éviter toute détérioration de l'actionneur électro-mécanique 200, il conviendra naturellement de prévoir un limiteur de couple avec un glissement, de façon que la venue en butée du levier de déverrouillage en secours 16 n'affecte pas les composants dudit actionneur. Dans cette position, l'excroissance 29 associée au levier 16 vient en regard du capteur inférieur 31, qui peut alors envoyer un signal correspondant à l'unité centrale de commande de l'aéronef. Le pivotement du levier 14 autour de son axe 15, par l'entremise de la liaison des ressorts 20, provoque le pivotement du crochet 12 autour de son axe 13. La noix 50 peut alors être libérée, comme c'était le cas après une séquence de déverrouillage normal.

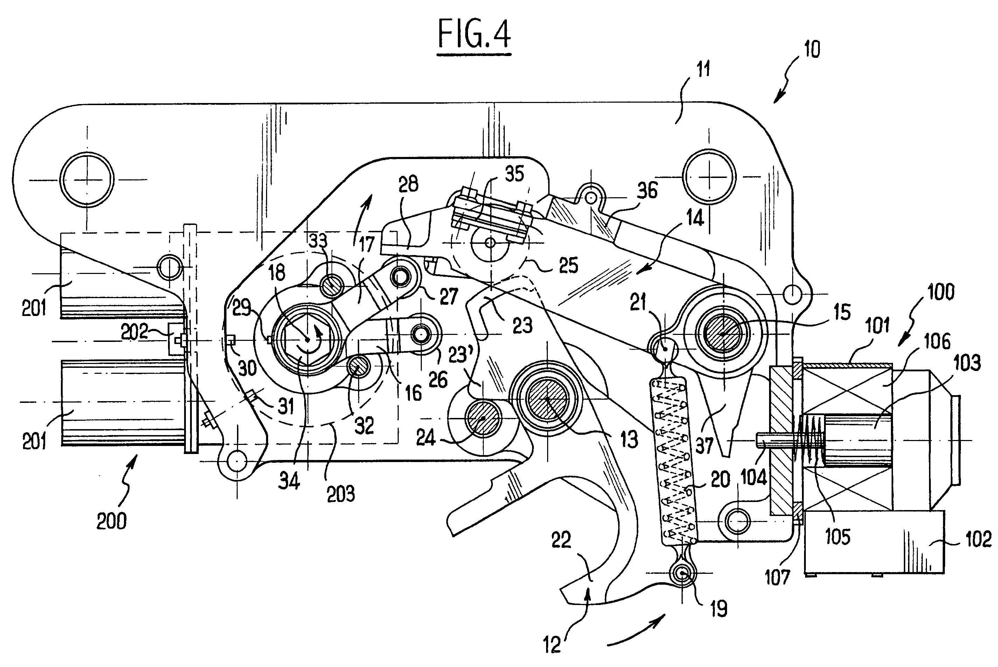

La figure 4 illustre une séquence proche de la précédente, et concerne le cas d'un déverrouillage en maintenance.

Au lieu du levier de déverrouillage en secours 16, c'est le levier adjacent de déverrouillage en maintenance 17 qui est alors actionné, en agissant, au moyen d'un outillage associé, sur le bout d'arbre hexagonal 34. Le levier 17 pivote alors, à l'encontre de l'action du ressort de torsion associé intégré au bout d'arbre 34, jusqu'à venir en appui contre la butée haute 33, en soulevant, par coopération entre son galet 27 et le béquet avant 28 du levier 14, faisant pivoter ledit levier 14, et par suite provoquant le pivotement du crochet 12 autour de son axe 13. Il est bien entendu nécessaire de maintenir l'effort sur l'outil utilisé pour conserver la position haute du levier 17, car, en cas de relâchement de cet effort, le ressort de torsion qui est intégré au bout d'arbre 34 provoquerait immédiatement le rappel du levier 17 dans sa position de repos naturel, en appui contre la butée basse 32.

On va maintenant décrire plus en détail la structure de l'actionneur électro-mécanique 200, associé au mode de fonctionnement en secours, en référence aux figures 6 à 9, qui illustrent des modes d'exécution préférés.

Chaque moteur électrique 201 de l'actionneur électro-mécanique 200 est équipé en aval d'un limiteur de couple 205, (par exemple de type magnétique, mécanique ou à friction) pour absorber l'énergie cinétique lorsque le levier de déverrouillage en secours 16 contacte la butée haute 33, et d'un moyen de bridage irréversible 206, également de préférence de type magnétique pour préserver le caractère irréversible de la transmission, même en cas de vibrations importantes ou de chocs brutaux. L'arbre de sortie de chaque moteur 201 est noté 207. Cet arbre de sortie 207 est en prise avec un train réducteur associé 208, dont l'arbre de sortie respectif 209 est couplé de façon irréversible au train différentiel commun 203, l'arbre de sortie 204 dudit train différentiel commun commandant le pivotement du levier de déverrouillage en secours 16 précédemment décrit. Chaque train réducteur 208 est en l'espèce à pignons droits : on distingue ainsi successivement, depuis l'arbre de sortie 207 de chaque moteur 201 jusqu'à l'arbre de sortie respectif 209, une succession de pignons 208.1, 208.2, 208.3, 208.4. En outre, la liaison irréversible de l'arbre de sortie 209 de chaque train réducteur 208 au train différentiel commun 203 est assurée par une vis sans fin associée 210.

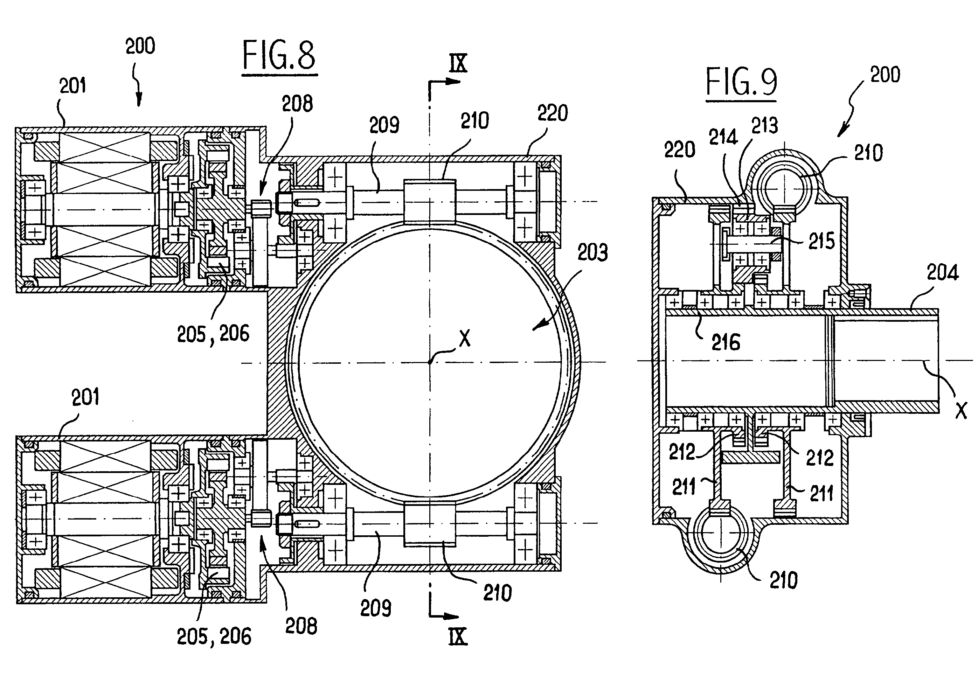

Le train différentiel commun 203, mieux visible sur les figures 7 à 9, est également à pignons droits. Chaque vis sans fin 210 attaque un pignon 211 qui porte un pignon coaxial plus petit 212. L'un des pignons 212 engrène avec des satellites 213 dont un seul est visible sur les figures 7 et 9, l'autre pignon 212 engrènant quant à lui avec une couronne 214 liée au boîtier du dispositif qui est noté 220. L'arbre 215 lié au satellite 213 est solidaire d'un arbre central 216 passant dans les pignons droits 211 et 212, pour sortir finalement par un arbre de sortie 204 qui commande le pivotement du levier de déverrouillage en secours 16.

Les figures 8 et 9 permettent de distinguer plus en détail la structure précise des composants précités, dont les figures 6 et 7 ne donnent que des représentations schématiques.

Grâce à cet agencement, l'excitation des deux moteurs 201 provoque la rotation de l'arbre de sortie 204, et par suite le pivotement du levier de déverrouillage en secours 16. On dispose alors d'un couple élevé pour procéder à cette opération de déverrouillage. Dans le cas où l'un des moteurs 201 viendrait à tomber en panne, le fonctionnement du moteur restant permet d'obtenir le même couple en sortie au niveau de l'arbre 204, le temps d'actionnement étant seulement alors doublé. L'agencement à deux moteurs est extrêmement avantageux car il procure une grande souplesse et une sécurité très importante, et il permet d'éviter que chaque moteur ait individuellement la charge de fournir le couple, ce qui eût obligé à un surdimensionnement indésirable. Lorsque l'alimentation électrique des moteurs 201 est coupée, le levier 16 reste dans sa position haute illustrée à la figure 3. Pour ramener ce levier 16 en position basse, il suffit d'inverser par un moyen électronique associé deux des trois phases du courant.

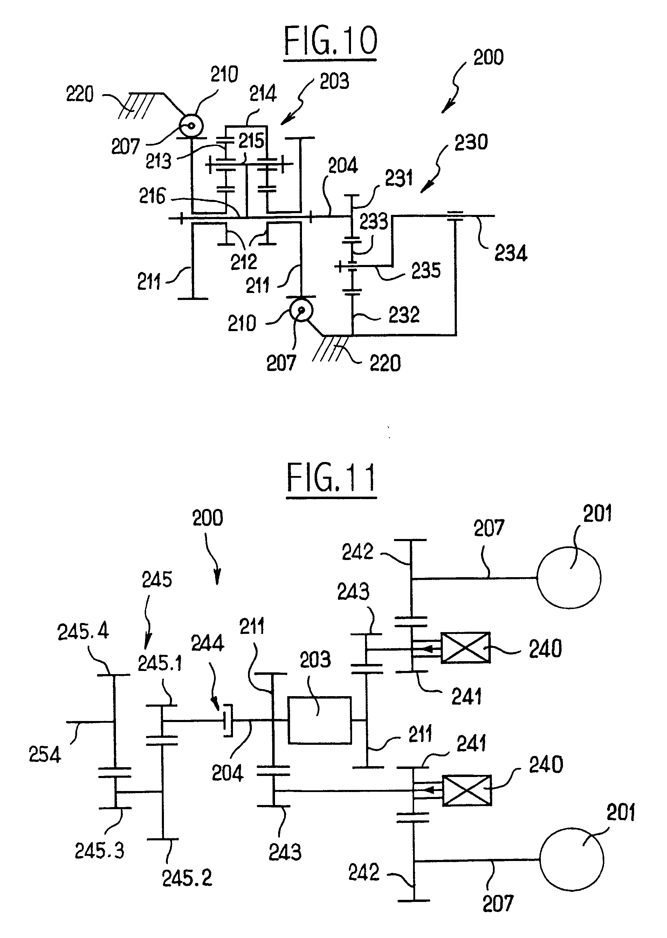

Il est bien entendu possible de prévoir d'autres variantes permettant d'obtenir le couple désiré pour actionner le levier de déverrouillage en secours 16, et on a illustré, à titre d'exemple, deux variantes également envisageables sur les figures 10 et 11.

La figure 10 illustre ainsi une première variante selon une représentation analogue à celle de la figure 7.

A la différence du mode d'exécution précédent, l'arbre de sortie 207 de chaque moteur 201 porte lui-même une vis sans fin 210 qui assure le couplage irréversible entre l'arbre de sortie 207 de chaque moteur 201 et le train différentiel commun 203. Ce train différentiel commun 203 est identique à celui de la figure 7, de sorte qu'il est inutile de le décrire à nouveau. L'arbre de sortie 204 de ce train différentiel commun 203 est maintenant relié à l'entrée d'un train réducteur épicycloïdal 230, dont la sortie 234 commande le pivotement du levier de déverrouillage en secours 16. Le train réducteur épicycloïdal 230 comporte une roue solaire 231, des satellites 233 et une couronne 232, l'arbre 235 associé à chaque satellite 233 étant solidairement relié à l'arbre de sortie 234 qui est coaxial à l'arbre 204 de sortie du train différentiel commun 203. On a illustré schématiquement en 220 la liaison au boîtier du système, ce qui permet en particulier de comprendre que la couronne 232 est reliée fixe audit boîtier 220.

Ainsi, là encore, la liaison irréversible de chaque arbre de sortie 207 avec le train différentiel 203 qui est à pignons droits est assurée par une vis sans fin associée 210. Un tel mode d'exécution permet d'obtenir de grands rapports de réduction.

Une autre variante a été illustrée en figure 11, avec une structure plus complexe que celle des systèmes précédemment décrits.

Sur le dispositif de la figure 11, l'arbre de sortie 207 de chacun des deux moteurs 201 est relié à un train différentiel commun 203 qui est à pignons coniques par l'intermédiaire d'un mécanisme anti-retour associé 240. Un tel mécanisme anti-retour permet de préserver parfaitement le caractère irréversible de la transmission en cas de panne de l'un des deux moteurs, de façon plus efficace qu'un dispositif d'irréversibilité purement mécanique. Un pignon droit 242 est ainsi monté sur chaque arbre de sortie 207, et engrène avec un pignon 241 monté en sortie de chaque mécanisme anti-retour 240 à chacun de ces pignons 241 étant associé un pignon droit coaxial 243 engrénant avec un pignon 211 associé au différentiel 203 à pignons coniques. L'arbre de sortie 204 du différentiel à pignons coniques 203 est relié, par l'intermédiaire d'un limiteur de couple 244, à un train réducteur 245, dont l'arbre de sortie 254 commande le pivotement du levier de déverrouillage en secours 16. Le limiteur de couple 244 sera de préférence un limiteur à friction, et le train réducteur 245 sera de préférence un train à pignons droits analogue à chacun des trains 208 du premier mode d'exécution décrit plus haut. Ce train réducteur 245 comprend ainsi successivement des pignons droits 245.1, 245.2, 245.3, et 245.4.

Les deux modes d'exécution illustrés aux figures 10 et 11 qui viennent d'être décrits illustrent donc d'autres façons de prévoir l'agencement de deux moteurs électriques 201 associés de façon irréversible à un train différentiel commun 203. On trouve à chaque fois un arbre de sortie, respectivement 204, 234, 254, qui commande le pivotement du levier de déverrouillage en secours 16 coopérant avec le levier de verrouillage 14 utilisé en fonctionnement normal.

L'homme de l'art comprendra que l'irréversibilité peut être obtenue par des moyens structurellement différents mais assurant la même fonction : on peut citer à titre d'exemples non limitatifs la liaison roue-vis tangente irréversible ou les systèmes anti-retour comme déjà décrit, ou encore un frein à manque de courant placé derrière chaque moteur.

Dans tous les cas, il sera avantageux de prévoir que l'actionneur électro-mécanique 200, tout comme l'actionneur électro-magnétique 100 précédemment décrit, avec ses deux moteurs électriques 201 et son train différentiel commun 203, est fixé au boîtier 11 de façon démontable, en étant aisément accessible, pour pouvoir être directement remplacé par un autre actionneur sans avoir à démonter ledit boîtier.

L'invention n'est pas limitée aux modes de réalisation qui viennent d'être décrits, mais englobe au contraire toute variante reprenant, avec des moyens équivalents, les caractéristiques essentielles énoncées plus haut.

## Revendications

1. Dispositif d'accrochage (10), notamment pour l'accrochage d'un train d'atterrissage d'aéronef ou d'une trappe de train d'atterrissage d'aéronef, comportant un boîtier (11) dans lequel est agencé un ensemble d'éléments articulés (12 ; 14 ; 16, 17) montés pour pivoter autour d'axes respectifs parallèles (13 ; 15 ; 18), ledit ensemble incluant à tout le moins un crochet (12) et un levier de verrouillage (14), ledit crochet pouvant être déverrouillé en agissant soit sur ledit levier de verrouillage par un premier moyen d'actionnement (100) dans un mode de fonctionnement normal, soit par un second moyen d'actionnement (200) dans un mode de fonctionnement en secours lorsque ledit premier moyen d'actionnement ne parvient pas à déverrouiller le crochet (12), **caractérisé en ce que** le levier de verrouillage (14) est relié au crochet (12) par des moyens de rappel élastiquement déformables (20) associés, et **en ce que** le premier moyen d'actionnement associé au mode de fonctionnement normal est un actionneur électro-mécanique (100) à commande électrique indépendante (102), ledit actionneur électro-mécanique (100) étant de faible puissance, c'est-à-dire de puissance inférieure à celle qui serait nécessaire pour déverrouiller le crochet (12) en l'absence d'un soulagement préalable de celui-ci.

2. Dispositif d'accrochage (10) selon la revendication 1, **caractérisé en ce que** l'actionneur électro-mécanique (100) est un électro-aimant fixé au boîtier (11), dont le noyau plongeur (103) commande le mouvement axial ou rotatif d'un poussoir (104) agissant sur le levier de verrouillage (14).

3. Dispositif d'accrochage (10) selon la revendication 2, **caractérisé en ce que** l'électro-aimant (100) inclut un ressort (105) tendant à rappeler le poussoir (104) dans une position rentrée dès que ledit électro-aimant cesse d'être excité, laquelle position correspond à une position verrouillée du levier de verrouillage (14) .

4. Dispositif d'accrochage (10) selon la revendication 2 ou la revendication 3, **caractérisé en ce que** le poussoir (104) de l'électro-aimant (100) coopère avec un appendice saillant (37) du levier de verrouillage (14) prévu sur ledit levier au voisinage de l'axe de pivotement (15) de celui-ci.

5. Dispositif d'accrochage (10) selon l'une quelconque des revendications 2 à 4, **caractérisé en ce que** l'électro-aimant (100) est du type à double bobinage (106), et inclut de préférence un moyen de diminution de la consommation électrique après la fin du mouvement de déverrouillage.

6. Dispositif d'accrochage (10) selon l'une quelconque des revendications 2 à 5, **caractérisé en ce que** l'électro-aimant (100) est fixé au boîtier (11) de façon démontable, en étant aisément accessible, pour pouvoir être directement remplacé par un autre électro-aimant sans avoir à démonter ledit boîtier.

7. Dispositif d'accrochage (10) selon la revendication 1, **caractérisé en ce que** l'actionneur électro-mécanique (100) est un vérin électrique linéaire, ou encore un moto-réducteur ou un moteur couple de petite taille.

8. Dispositif d'accrochage (10) selon la revendication 1, **caractérisé en ce que** le second moyen d'actionnement (200) associé au mode de fonctionnement en secours est également un actionneur électro-mécanique à commande électrique indépendante (202), ledit actionneur électro-mécanique comportant deux moteurs électriques (201) associés de façon irréversible à un train différentiel commun (203), dont un arbre de sortie (204 ; 234 ; 254) commande le pivotement d'un levier de déverrouillage en secours (16) coopérant avec le levier de verrouillage (14) utilisé en fonctionnement normal.

9. Procédé de fonctionnement d'un dispositif d'accrochage (10) selon l'une quelconque des revendications 1 à 8, ledit dispositif servant à assurer l'accrochage d'un train d'atterrissage d'aéronef (1) dont le mouvement entre les positions train bas et train haut est commandé de façon connue en soi par un vérin de manoeuvre (6), ledit procédé intervenant pour la libération du train rentré et comportant la succession d'étapes suivantes :
- on agit sur le vérin de manoeuvre (6) du train (1) dans le sens de la rentrée dudit train pour soulager le levier de verrouillage (14) du dispositif d'accrochage (10) ;
- on commande le premier moyen d'actionnement (100) pour déverrouiller le crochet (12) ainsi soulagé ; et
- on agit sur le vérin de manoeuvre (6) du train (1) dans le sens de la sortie dudit train, ledit premier moyen d'actionnement (100) restant alimenté.

10. Procédé selon la revendication 9, **caractérisé en ce qu'**en cas de dysfonctionnement de l'étape préliminaire de soulagement du crochet (12) du dispositif d'accrochage (10), on commande le second moyen d'actionnement (200) pour déverrouiller en secours le crochet (12), la descente du train (1) s'effectuant alors éventuellement librement par gravité.

## Patentansprüche

1. Verriegelungsvorrichtung (10), insbesondere zur Verriegelung eines Flugzeug-Fahrwerks oder einer Flugzeug-Fahrwerkklappe, umfassend ein Gehäuse (11), in dem eine Gruppe angelenkter Elemente (12; 14; 16, 17) angeordnet ist, die schwenkbar um jeweilige parallele Achsen (13; 15; 18) gelagert sind, wobei die Gruppe mindestens einen Haken (12) und einen Verriegelungshebel (14) enthält, wobei der Haken entriegelt werden kann, indem man auf den Verriegelungshebel entweder durch erste Betätigungsmittel (100) in einem Normalbetriebsmodus oder, wenn die ersten Betätigungsmittel den Haken (12) nicht entriegeln können, durch zweite Betätigungsmittel (200) in einem Hilfsbetriebsmodus einwirkt, **dadurch gekennzeichnet, dass** der Verriegelungshebel (14) mit dem Haken (12) durch dazugehörige elastisch verformbare Rückstellmittel (20) verbunden ist und dass es sich bei den ersten, dem Normalbetriebsmodus zugeordneten Betätigungsmitteln um eine elektromechanische Betätigungsvorrichtung (100) mit unabhängiger elektrischer Steuerung (102) handelt, wobei die elektromechanische Betätigungsvorrichtung (100) eine geringe Leistung hat, d.h. eine Leistung, die geringer ist als die, die erforderlich wäre, um den Haken (12) bei fehlender vorheriger Entlastung zu entriegeln.

2. Verriegelungsvorrichtung (10) nach Anspruch 1, **dadurch gekennzeichnet, dass** die elektromechanische Betätigungsvorrichtung (100) ein am Gehäuse (11) befestigter Elektromagnet ist, dessen Tauchanker (103) die Axial- oder Drehbewegung eines Stößels (104) steuert, der auf den Verriegelungshebel (14) einwirkt.

3. Verriegelungsvorrichtung (10) nach Anspruch 2, **dadurch gekennzeichnet, dass** der Elektromagnet (100) eine Feder (105) enthält, die dazu neigt, den Stößel (104) in eine Rückzugsposition zurückzustellen, sobald der Elektromagnet nicht mehr erregt wird, wobei diese Position einer Verriegelungsposition des Verriegelungshebels (14) entspricht.

4. Verriegelungsvorrichtung (10) nach Anspruch 2 oder Anspruch 3, **dadurch gekennzeichnet, dass** der Stößel (104) des Elektromagneten (100) mit einem vorstehenden Ansatzstück (37) des Verriegelungshebels (14) zusammenwirkt, das an dem Hebel nahe dessen Schwenkachse (15) vorgesehen ist.

5. Verriegelungsvorrichtung (10) nach einem der Ansprüche 2 bis 4, **dadurch gekennzeichnet, dass** der Elektromagnet (100) vom Typ mit Doppelspule (106) ist und vorzugsweise Reduzierungsmittel zur Reduzierung des Stromverbrauchs nach dem Ende der Entriegelungsbewegung enthält.

6. Verriegelungsvorrichtung (10) nach einem der Ansprüche 2 bis 5, **dadurch gekennzeichnet, dass** der Elektromagnet (100) am Gehäuse (11) lösbar befestigt ist, indem er leicht zugänglich ist, so dass er direkt durch einen anderen Elektromagneten ersetzt werden kann, ohne dass das Gehäuse zerlegt werden muss.

7. Verriegelungsvorrichtung (10) nach Anspruch 1, **dadurch gekennzeichnet, dass** die elektromechanische Betätigungsvorrichtung (100) ein elektrischer Linearantrieb oder auch ein Getriebemotor oder ein Drehmomentmotor kleiner Größe ist.

8. Verriegelungsvorrichtung (10) nach Anspruch 1, **dadurch gekennzeichnet, dass** es sich bei den zweiten, dem Hilfsbetriebsmodus zugeordneten Betätigungsmittel (200) ebenfalls um eine elektromechanische Betätigungsvorrichtung mit unabhängiger elektrischer Steuerung (202) handelt, wobei die elektromechanische Betätigungsvorrichtung zwei Elektromotoren (201) umfasst, die auf irreversierbare Weise mit einem gemeinsamen Differentialgetriebe (203) verbunden sind, von dem eine Abtriebswelle (204; 234; 254) das Schwenken des Hilfsverriegelungshebels (16) steuert, der mit dem Verriegelungshebel (14), der bei Normalbetrieb verwendet wird, zusammenwirkt.

9. Betriebsverfahren für eine Verriegelungsvorrichtung (10) nach einem der Ansprüche 1 bis 8, wobei die Vorrichtung dazu dient, die Verriegelung eines Flugzeug-Fahrwerks (1) sicherzustellen, dessen Bewegung zwischen der eingefahrenen Position und der ausgefahrenen Position auf an sich bekannte Weise von einem Betätigungszylinder (6) gesteuert wird, wobei das Verfahren für das Ausfahren des eingefahrenen Fahrwerks eingesetzt wird und nacheinander die folgenden Schritte umfasst:
- Einwirken auf den Betätigungszylinder (6) des Fahrwerks (1) in Richtung des Einzugs des Fahrwerks, um den Verriegelungshebel (14) der Verriegelungsvorrichtung (10) zu entlasten,
- Steuern der ersten Betätigungsmittel (100), um den so entlasteten Haken (12) zu entriegeln,
- Einwirken auf den Betätigungszylinder (6) des Fahrwerks (1) in Richtung der Austrittsöffnung des Fahrwerks, wobei die ersten Betätigungsmittel (100) weiterhin gespeist werden.

10. Verfahren nach Anspruch 9, **dadurch gekennzeichnet, dass** im Falle einer Funktionsstörung bei der Vorstufe der Entlastung des Hakens (12) der Verriegelungsvorrichtung (10) die zweiten Betätigungsmittel (200) so gesteuert werden, dass sie den Haken (12) hilfsweise entriegeln, wobei das Absenken des Fahrwerks (1) dann unter Umständen frei aufgrund von Schwerkraft erfolgt.

## Claims

1. A latch device (10), in particular for latching an airplane landing gear or an airplane landing gear hatch, the device comprising a box (11) containing a set of hinged elements (12; 14; 16, 17) mounted to pivot about respective parallel axes (13; 15; 18), said assembly including at least one hook (12) and a locking lever (14) said hook being capable of being unlocked by acting on said locking lever either via a first actuator means (100) in a normal mode of operation, or via a second actuator means (200) in an emergency mode of operation when said first actuator means fails to unlock the hook (12), the device being **characterized in that** the locking lever (14) is connected to the hook (12) by associated elastically deformable return means (20), and **in that** said first actuator means associated with the normal mode of operation is an electromechanical actuator (100) under independent electrical control (102), said electromechanical actuator (100) being of low power, i.e. of a lower power than the one which would be required to unlock the hook (12) without any previous unloading thereof.

2. A latch device (10) according to claim 1, **characterized in that** the electromechanical actuator (100) is an electromagnet fixed to the box (11), having a plunger core (103) controlling axial or rotary displacement of a pusher (104) acting on the locking lever (14).

3. A latch device (10) according to claim 2, **characterized in that** the electromagnet (100) includes a spring (105) urging the pusher (104) towards a retracted position as soon as said electromagnet ceases to be excited, which position corresponds to the locking lever (14) being in a locked position.

4. A latch device (10) according to claim 2 or claim 3, **characterized in that** the pusher (104) of the electromagnet (100) co-operates with a projecting appendix (37) of the locking lever (14) provided on said lever in the vicinity of the pivot axis (15) thereof.

5. A latch device (10) according to any one of claims 2 to 4, **characterized in that** the electromagnet (100) is of the type having dual coils (106), and preferably includes means for reducing its electricity consumption after the end of its unlocking stroke.

6. A latch device (10) according to any one of claims 2 to 5, **characterized in that** the electromagnet (100) is fixed to the box (11) in removable manner, and is easily accessible, so as to be capable of being replaced directly by another electromagnet without it being necessary to dismantle said box.

7. A latch device (10) according to claim 1, **characterized in that** the electromechanical actuator (100) is a linear electrical actuator, or indeed a motor and stepdown gear box unit, or a small-sized torque motor.

8. A latch device (10) according to claim 1, **characterized in that** the second actuator means (200) associated with the emergency mode of operation is likewise an electromechanical actuator under independent electrical control (202), said actuator comprising two electric motors (201) associated in irreversible manner with a common differential gear train (203), the gear train having an outlet shaft (204; 234; 254) controlling pivoting of an emergency unlocking lever (16) that co-operates with the locking lever (14) used in normal operation.

9. A method of operating a latch device (10) according to any one of claims 1 to 8, said device serving to latch an airplane landing gear (1) which is moved between a landing gear extended position and a landing gear retracted position in conventional manner by a drive actuator (6), said method being applied to release the retracted landing gear and comprising the following succession of steps:
- acting on the drive actuator (6) for the landing gear (1) in the landing gear retraction direction so as to unload the locking lever (14) of the latch device (10);
- causing the first actuator means (100) to operate to unlock the hook (12) as unloaded in this manner; and
- acting on the drive actuator (6) for the landing gear (1) so as to extend said landing gear, said first actuator means (100) remaining powered.

10. A method according to claim 9, **characterized in that** in the event of the preliminary step of unloading the hook (12) of the latch device (10) malfunctioning, the second actuator means (200) is operated to perform emergency unlocking of the hook (12), with the landing gear (1) subsequently being lowered, possibly under gravity.
